# EUROPEAN PATENT SPECIFICATION

(11) **EP 4 546 693 B1**
(45) Date of publication and mention of the grant of the patent: **25.02.2026**
(21) Application number: 23870565.1
(22) Date of filing: 21.09.2023
(51) Int. Cl.: H04L 1/1829, H04L 5/00

(54) **RESOURCE SELECTION METHOD AND DEVICE SUITABLE FOR SIDELINK, AND USER EQUIPMENT**
RESSOURCENAUSWAHLVERFAHREN UND -VORRICHTUNG FÜR SIDELINK UND BENUTZERGERÄT
PROCÉDÉ ET DISPOSITIF DE SÉLECTION DE RESSOURCES APPROPRIÉS POUR UNE LIAISON LATÉRALE, ET ÉQUIPEMENT UTILISATEUR

(30) Priority: 30.09.2022 CN 202211214457
(43) Date of publication of application: 30.04.2025
(73) Proprietor: CICT Connected and Intelligent Technologies Co., Ltd., Chongqing 400041 (CN)
(72) Inventor: WANG, Yakun, Chongqing 400000 (CN); ZHAO, Rui, Chongqing 400000 (CN); WEN, Xiaoran, Chongqing 400000 (CN)
(74) Representative: Murgitroyd & Company
(86) International application number: PCT/CN2023/120277
(87) International publication number: WO 2024/067333

(56) References cited:
- WO-A1-2021/215788
- WO-A1-2021/242030
- CN-A- 111 865 485
- CN-A- 111 865 505
- US-A1- 2021 007 081
- US-A1- 2022 264 585
- US-A1- 2023 171 789
- US-A1- 2023 276 462

## Description

### CROSS-REFERENCE TO RELATED APPLICATIONS

This application claims priority to Chinese Patent Application No. 202211214457.3, filed on September 30, 2022.

### TECHNICAL FIELD

The present disclosure relates to the field of communications technologies, and in particular, to a resource selection method and apparatus for a sidelink, and a user equipment.

### BACKGROUND

Currently, there is a one-to-one correspondence between a physical sidelink shared channel (Physical Sidelink Shared Channel, PSSCH) and a physical sidelink feedback channel (Physical Sidelink Feedback Channel, PSFCH), that is, one time of PSSCH transmission corresponds to only one time of PSFCH feedback. In a design of sidelink operation on unlicensed spectrum (Sidelink Operation on Unlicensed Spectrum, SL-U), to resolve a problem that a PSFCH cannot be transmitted due to a channel access failure, one time of PSSCH transmission may correspond to a plurality of times of PSFCH transmission in different slots, that is, there is a one-to many relationship between a PSSCH and a PSFCH. Practically, there is no PSSCH resource selection mechanism for the one-to-many relationship between a PSSCH and a PSFCH. If a time gap between two consecutive times of PSSCH transmission is still executed according to a related technology, there is only one PSFCH feedback occasion between the two times of PSSCH transmission. This may cause resource waste due to excessive retransmission, or may cause that a transmitting end cancels subsequent retransmission in a case of a receiving failure at a receiving end. Consequently, a data packet fails to be decoded, resulting in that an object of providing a plurality of PSFCH feedback occasions cannot be achieved.
US2022/264585A1 generally relates to wireless communication. In some aspects, a first user equipment (UE) may send, to a second UE, a first physical sidelink shared channel (PSSCH) transmission. The first UE may select, for a second PSSCH transmission, a PSSCH resource for which a corresponding physical sidelink feedback channel (PSFCH) resource does not collide with one of a plurality of PSFCH transmissions in accordance with a repetition factor associated with the first PSSCH transmission. The first UE may send, to the second UE, the second PSSCH transmission via the PSSCH resource. Numerous other aspects are described.

### SUMMARY

An objective of the present disclosure is to provide a resource selection method and apparatus for a sidelink, and a user equipment, to resolve a problem that there is no PSSCH resource selection mechanism for a one-to-many relationship between a PSSCH and a PSFCH.

The invention is set out in the appended set of claims.

### BRIEF DESCRIPTION OF THE DRAWINGS

FIG. 1 is a schematic diagram of a one-to-one correspondence between a PSSCH and a PSFCH.
FIG. 2 is a schematic flowchart 1 of a resource selection method for a sidelink according to an embodiment of the present disclosure.
FIG. 3 is a schematic flowchart 2 of a resource selection method for a sidelink according to an embodiment of the present disclosure.
FIG. 4 is a schematic diagram of a correspondence in which one PSSCH corresponds to two PSFCHs according to an embodiment of the present disclosure.
FIG. 5 is a schematic diagram of a correspondence in which one PSSCH corresponds to a maximum of two PSFCHs according to an embodiment of the present disclosure.
FIG. 6 is a schematic diagram 1 of resource selection when a HARQ feedback time and an indication limitation of SCI cannot be met at the same time according to an embodiment of the present disclosure.
FIG. 7 is a schematic diagram 2 of resource selection when a HARQ feedback time and an indication limitation of SCI cannot be met at the same time according to an embodiment of the present disclosure.
FIG. 8 is a schematic diagram 1 of PSFCH feedback according to an embodiment of the present disclosure.
FIG. 9 is a schematic diagram 2 of PSFCH feedback according to an embodiment of the present disclosure.
FIG. 10 is a schematic structural diagram 1 of a resource selection apparatus for a sidelink according to an embodiment of the present disclosure.
FIG. 11 is a schematic structural diagram 2 of a resource selection apparatus for a sidelink according to an embodiment of the present disclosure.
FIG. 12 is a schematic structural diagram of a user equipment according to an embodiment of the present disclosure.

### DETAILED DESCRIPTION OF THE EMBODIMENTS

To make the technical problems to be resolved, technical solutions, and advantages of the present disclosure clearer, the following describes the present disclosure in detail with reference to the accompanying drawings and specific embodiments. In the following descriptions, specific details such as specific configurations and components are provided only to help fully understand embodiments of the present disclosure. Therefore, a person skilled in the art should understand that various changes and modifications may be made to the embodiments described herein without departing from the scope of the present disclosure, in accordance with the appended claims. In addition, for clarity and simplicity, descriptions of known functions and constructions are omitted.

It should be understood that, "one embodiment" and "an embodiment" throughout this specification means that specific features, structures or characteristics related to the embodiments may be included in at least one embodiment of the present disclosure. Therefore, descriptions of "in one embodiment" or "in an embodiment" in various places throughout this specification are unnecessary to refer to a same embodiment. In addition, the specific features, structures, or characteristics may be combined in one or more embodiments in any appropriate manner.

In embodiments of the present disclosure, it should be understood that, sequence numbers of the foregoing processes do not mean execution sequences. The execution sequences of the processes should be determined based on functions and internal logic of the processes, and should not be construed as any limitation on the implementation processes of embodiments of the present disclosure.

In embodiments of the present disclosure, it should be understood that, "B that corresponds to A" means that B is associated with A, and B may be determined based on A. However, it should be further understood that determining B based on A does not mean that B is determined based on only A. B may alternatively be determined based on A and/or other information.

Before embodiments of the present disclosure are described, related technical terms are first explained.

### I. Hybrid automatic repeat request (Hybrid Automatic Repeat reQuest, HARQ) feedback mechanism

Acknowledgement (Acknowledgement, ACK) or negative acknowledgement (Negative Acknowledgement, NACK) feedback: After a UE receives a data packet, if the UE successfully decodes the data packet, the UE feeds back an ACK. If the UE does not successfully decode the data packet, the UE feeds back a NACK. This feedback manner applies to unicast and connected multicast. An advantage of this feedback manner is that a discontinuous transmission (Discontinuous Transmission, DTX) status may be identified. For multicast, this feedback manner is mainly applied to a case when there are a relatively small quantity of UEs in a group, because each receiving UE has an independent PSFCH resource. If there are a relatively large quantity of UEs in a group, a problem of PSFCH resource allocation may occur.

NACK only (only) feedback manner: This manner applies to connectionless multicast. All receiving UEs share a same PSFCH feedback resource. If any UE fails to correctly receive a PSSCH, the UE transmits HARQ NACK information on a corresponding PSFCH resource. A potential problem of this manner is that the DTX status cannot be distinguished from an ACK status. Therefore, when an error occurs in detection of a physical sidelink control channel (Physical Sidelink Control Channel, PSSCH), a transmitting (Transmission, TX) UE cannot discover an error in transmission of the PSSCH.

### 2. Correspondence between a PSFCH and a PSSCH

A current PSFCH resource is determined in an implicit mapping manner, and there is a one-to-one mapping relationship between a PSFCH and a PSSCH, that is, one PSSCH corresponds to a PSFCH resource in only one slot. The mapping manner includes the following two manners.

Manner 1: a PSFCH candidate resource is mapped based on a slot number of an associated PSSCH and a number of a start sub-channel.

Manner 2: a PSFCH candidate resource is mapped based on a slot number of an associated PSSCH and a number of a sub-channel occupied by transmission of the PSSCH.

### 3. PSSCH resource selection under a mechanism that supports HARQ feedback (feedback)

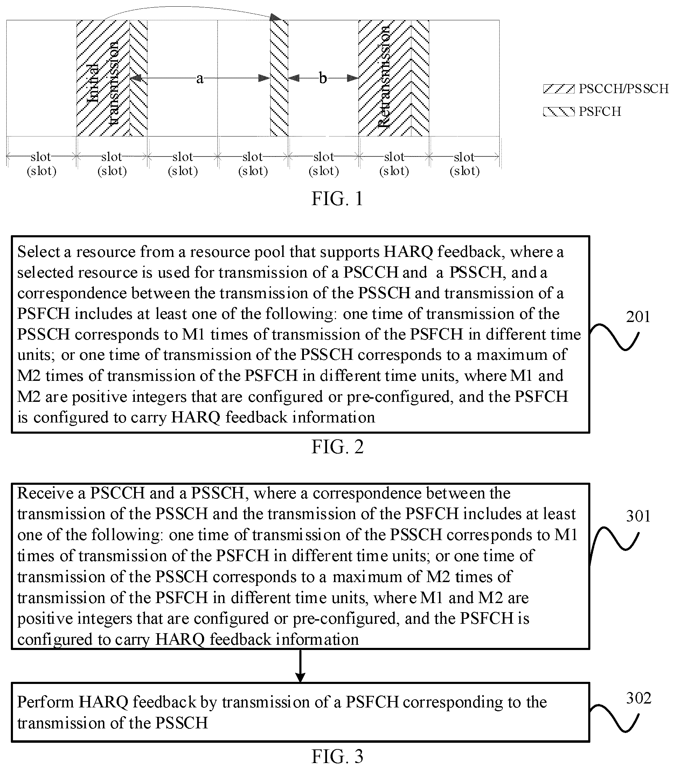

When a UE performs resource selection, a time gap between any two resources should be greater than or equal to a minimum time gap Z, where the minimum time gap includes two parts (Z = a + b), as shown in FIG. 1.

Herein a represents a time gap between a last symbol of a first resource (that is, s first resource between the foregoing any two resources) used for transmission of a PSSCH and a first start symbol of a resource for receiving a PSFCH corresponding to the PSSCH. The time gap is based on a higher-layer parameter sl-MinTimeGapPSFCH-r16 (which represents a minimum time difference between the PSSCH and the corresponding PSFCH, a value thereof may be {2,3}, and a unit is a slot) and a higher-layer parameter sl-PSFCH-Period-r16 (which represents a period for configuring a PSFCH resource in a resource pool, a value thereof may be {0,1,2,4}, and a unit is a slot).

Herein b represents a PSFCH receiving and processing time and a retransmission preparation time (including a physical channel multiplexing time and a TX-RX or RX-TX conversion time), and a value of b depends on implementation of a UE.

With reference to the accompanying drawings, the following describes in detail a resource selection method and apparatus for a sidelink and a user equipment according to embodiments of the present disclosure.

As shown in FIG. 2, an embodiment of the present disclosure provides a resource selection method for a sidelink, applied to a first user equipment. The method includes step S201.

In step S201, a resource is selected from a resource pool that supports HARQ feedback, where a selected resource is used for transmission of a PSCCH and transmission of a PSSCH, and a correspondence between the transmission of the PSSCH and transmission of a PSFCH includes at least one of the following:
one time of transmission of the PSSCH corresponds to M1 times of transmission of the PSFCH which is over different time units; or
one time of transmission of the PSSCH corresponds to a maximum of M2 times of transmission of the PSFCH which is over different time units, where
M1 and M2 are positive integers that are configured or pre-configured, and the PSFCH is used to carry HARQ feedback information.

Herein, it should be noted that, first, the PSCCH is used to transmit sidelink scheduling information, that is, the PSCCH is used to transmit scheduling information of the PSSCH. Second, in this embodiment of the present disclosure, the time unit may be a time granularity such as a subframe or a slot. Third, M1 and M2 may be the same or different.

In the resource selection method for a sidelink according to this embodiment of the present disclosure, a first user equipment selects a resource used for transmission of a PSCCH and transmission of a PSSCH from a resource pool that supports HARQ feedback. A correspondence between the transmission of the PSSCH and transmission of a PSFCH corresponding to the transmission of the PSSCH includes at least one of the following: one time of transmission of the PSSCH corresponds to M1 times of transmission of the PSFCH which is over different time units; or one time of transmission of the PSSCH corresponds to a maximum of M2 times of transmission of the PSFCH which is over different time units, where M1 and M2 are positive integers that are configured or pre-configured, and the PSFCH is used to carry HARQ feedback information. In a case there is a one-to-many correspondence between a PSSCH and a PSFCH, a plurality of PSFCH feedback occasions are provided for the resource selected for transmission of the PSSCH between two adjacent times of transmission of the PSSCH, thereby effectively solving the following problems that a PSFCH cannot be transmitted due to a channel access failure, resource waste is caused by excessive retransmission due to the transmission failure of the PSFCH, or a transmitting end cancels subsequent retransmission in a case of a receiving failure at a receiving end, resulting in a decoding failure of a data packet.

In an optional implementation, in this embodiment of the present disclosure, the selected resource used for the transmission of the PSSCH meets at least one of the following requirements:
(1) A time gap between any two resources used for the transmission of the PSSCH is greater than or equal to a HARQ feedback time.
   It should be noted herein that, in this optional implementation, any two PSSCHs to be transmitted belongs to a same transport block (Transport Block, TB). That is, a time gap between transmission of any two PSSCHs in a same TB should be greater than or equal to a HARQ feedback time.
(2) An indication limitation of sidelink control information (Sidelink Control Information, SCI), used to limit a time unit in which a PSSCH transmission resource indicated by the SCI is located. That is, a resource indicated by the indication limitation of the SCI needs to be within 32 slots. The indicated resource is further explained herein. A resource indicated by the SCI includes a resource used for current transmission (current transmission refers to transmission corresponding to the SCI) and a resource used for subsequent transmission indicated by a time resource indicator value (Time Resource Indicator Value, TRIV) or a frequency resource indicator value (Frequency Resource Indicator Value, FRIV). For example, a quantity of resources indicated by the SCI is 3, indicating that current transmission and two subsequent times of retransmission need to be performed in 32 slots.

It should be noted herein that a resource used for transmission of the PSSCH is a PSSCH transmission resource.

In a specific implementation, the HARQ feedback time is a sum of a first time length and a second time length.

The first time length is a time required for PSFCH reception and processing plus retransmission preparation, that is, the first time length includes a time during which the first user equipment receives and processes the PSFCH and a time preparing for retransmission of the PSSCH. In other words, the first time length is a sum of the time during which the PSFCH is received and processed and the time preparing for retransmission of the PSSCH is.

The second time length is any one of the following:
a time gap between a last symbol of the first resource in the any two resources used for the transmission of the PSSCH and a start symbol of a resource used for a last time of transmission of the PSFCH in the M1 times of transmission of the PSFCH corresponding to the transmission of the PSSCH; or
a time gap between a last symbol of the first resource in the any two resources used for the transmission of the PSSCH and a start symbol of a resource used for the N^{th} time of transmission of the PSFCH corresponding to the transmission of the PSSCH, where N is a positive integer less than or equal to M2.

With reference to specific examples, the following describes the HARQ feedback time in this specific embodiment.

### Example 1: One time of transmission of the PSSCH corresponds to M1 times of transmission of the PSFCH which is over different time units.

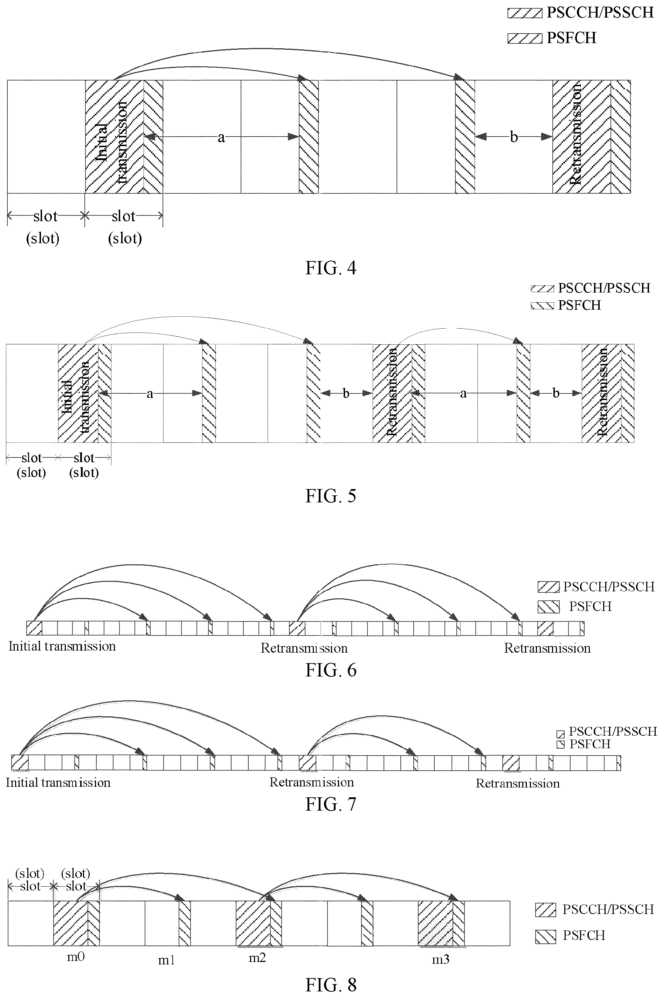

As shown in FIG. 4, one time of transmission of the PSSCH corresponds to two times of transmission of the PSFCH, and the two times of transmission of the PSFCH are two consecutive times of transmission of the PSFCH. When determining a resource used for the first time of transmission of the PSFCH, the first user equipment needs to consider a minimum time requirement between the PSSCH and a corresponding PSFCH. That is, the first PSFCH is the nearest PSFCH that meets the minimum time requirement (a time gap represented by "a" in FIG. 4 is greater than or equal to the minimum time requirement). A time gap between retransmission of the PSCCH or the PSSCH and the second PSFCH corresponding to initial transmission of the PSCCH or the PSSCH (a time gap represented by "b" in FIG. 4) needs to include a PSFCH receiving and processing time (a time during which the PSFCH is received and processed) and a retransmission preparation time (a time preparing for retransmission of the PSCCH or the PSSCH), that is, a time gap between the retransmission of the PSCCH or the PSSCH and the second PSFCH corresponding to the initial transmission of the PSCCH or the PSSCH should be greater than or equal to a sum of the PSFCH receiving and processing time and the retransmission preparation time.

### Example 2: One time of transmission of the PSSCH corresponds to a maximum of M2 times of transmission of the PSFCH which is over different time units.

As shown in FIG. 5, one time of transmission of the PSSCH corresponds to a maximum of two times of transmission of the PSFCH, where the initially transmitted PSSCH corresponds to two times of transmission of the PSFCH (that is, N is 2). Therefore, the first time of retransmission needs to be performed after the second PSFCH corresponding to the initial transmission, and a time gap between the second PSFCH corresponding to the initial transmission and the first time of retransmission of the PSSCH (a time gap indicated by "b" between the second time of transmission of the PSFCH corresponding to the initial transmission and the first time of retransmission in FIG. 5) needs to include a PSFCH receiving and processing time and a retransmission preparation time. A time gap between a last character of a resource used for the initial transmission of the PSSCH and a start symbol of a resource used for the two times of transmission of the PSFCH corresponding to the initial transmission of the PSSCH (for example, a time gap represented by "a" between initial transmission and the first time of transmission of the PSFCH in FIG. 5) should meet a minimum time gap requirement, and the minimum time gap requirement may be determined based on a higher-layer parameter.

The first time of retransmission of the PSSCH corresponds to one time of transmission of the PSFCH (that is, N is 1). Therefore, a time gap between two times of retransmission needs to meet a time requirement in a related technology. Specifically, a time gap between a last character of a resource used for the first time of retransmission of the PSSCH and the first character a resource used for transmission of a PSFCH corresponding to the first time of retransmission of the PSSCH (a time gap represented by "a" in FIG. 5) should meet a minimum time gap requirement. As described above, the minimum time gap requirement may be determined based on a higher-layer parameter. A time gap between the second time of retransmission of the PSSCH and the PSFCH corresponding to the first time of retransmission of the PSSCH (a time gap indicated by "b" in FIG. 5) needs to include a PSFCH receiving and processing time and a retransmission preparation time.

In addition, it should be further noted that a minimum value (a first time length) of the PSFCH receiving and processing time and the PSSCH retransmission preparation time should depend on implementation of a terminal. The PSFCH receiving and processing time and the PSSCH retransmission preparation time include a physical channel multiplexing time and a transmission-to-receiving (TX-RX) or receiving-to-transmission (RX-TX) conversion time.

In an optional implementation, N is configured, pre-configured, or determined based on at least one of the following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH (which may be a minimum time gap between a last character of a resource used for transmission of the PSSCH and the first character of the resource used for transmission of the first PSFCH corresponding to the PSSCH), a PSFCH receiving and processing time (a time during which the PSFCH is received and processed), a retransmission preparation time (a time during which retransmission is prepared), or a channel occupancy time (Channel Occupied Time, COT).

With reference to specific examples, the following describes a process of determining N.

For example, maximum duration of the determined COT is 10 slots (slot), and the period configured for a PSFCH is four slots. To ensure that transmission of a PSFCH and transmission of a PSSCH are performed within a same COT, a maximum value of N is set to 2, that is, one time of transmission of the PSSCH corresponds to a maximum of two times of transmission of the PSFCH.

For another example, the maximum quantity of resources indicated by SCI is 3, and a quantity of resources actually indicated by SCI is also 3. To ensure that initial transmission and retransmission are performed within 32 slots, it is assumed that a period of the PSFCH is four slots, and each PSSCH corresponds to a maximum of three times of transmission of a PSFCH.

In an optional implementation, in step S201, the process of selecting a resource from a resource pool that supports hybrid automatic repeat request HARQ feedback includes:
in a case in which the HARQ feedback time and the indication limitation of the SCI cannot be met at the same time, selecting the resource according to any one of the following principles:
preferentially meeting the HARQ feedback time; or
preferentially meeting the indication limitation of the SCI.

That is, if both the HARQ feedback time and the indication limitation of the SCI need to be considered for a time gap between resources used for transmission of the PSSCH corresponding to one TB, and the HARQ feedback time and the indication limitation of the SCI cannot be met at the same time, a resource may be selected for transmission of the PSCCH or the PSSCH from the resource pool that supports HARQ feedback according to the following principles. The HARQ feedback time may be preferentially met when resource selection is performed. That is, a time gap between any two times of transmission of the PSSCH meets the HARQ feedback time that is configured, pre-configured, or pre-defined. Alternatively, the limitation indication of the SCI may be preferentially met when resource selection is performed, that is, it is ensured that a resource indicated by the SCI is located in a time unit range (for example, 32 slots) that is configured, pre-configured, or pre-defined.

In a specific implementation, the process of selecting the resource selection according to the principle of preferentially meeting the indication limitation of the SCI includes:
adjusting a quantity of times of transmission of the PSFCH corresponding to the transmission of the PSSCH, where the quantity of times of transmission of the PSFCH corresponding to the transmission of the PSSCH is configured, pre-configured, or determined based on at least one of the following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH, a PSFCH receiving and processing time, a retransmission preparation time, or a COT; and
selecting the resource from the resource pool based on the determined quantity of times of transmission of the PSFCH corresponding to the transmission of the PSSCH.

For example, one time of transmission of the PSSCH corresponds to K times of transmission of the PSFCH, where the configured or pre-configured K is a positive integer less than or equal to M2, and K may be determined based on at least one of the foregoing factors. In a special case, K may only be set or pre-set to 1.

With reference to specific examples, the following describes selecting resource based on the HARQ feedback time and the indication limitation of the SCI.

A maximum quantity of reserved resources that are indicated by the SCI and configured in the resource pool is 3. As shown in FIG. 6, the period configured for the PSFCH is 4. In this case, one PSSCH corresponds to three adjacent PSFCHs located in different slots. Therefore, if resource selection is performed according to a one-to-three correspondence between a PSSCH and a PSFCH, a time gap between initial transmission and retransmission is greater than a maximum gap (32 slots) indicated by the SCI. Therefore, in this case, to meet the indication limitation of the SCI, initial transmission may indicate only the first time of retransmission, and the first time of retransmission indicates only the second time of retransmission.

In addition, for a case in which the HARQ feedback time and the indication limitation of the SCI cannot be met at the same time, resource selection may be performed when the HARQ feedback time between some resources that are used for transmission of the PSSCH and that are in the resources indicated by the SCI is met, and the resources indicated by the SCI meet the indication limitation of the SCI. Exemplarily, a maximum quantity of reserved resources that are indicated by the SCI and configured in the resource pool is 3. To ensure that the SCI indicates as many reserved resources as possible, as described above, if retransmission is always performed after all PSFCHs corresponding to a previous time of transmission, it cannot be ensured that initial transmission indicates three resources. In this case, as shown in FIG. 7, initial transmission of a PSSCH may correspond to three PSFCHs. To reduce a transmission interval, the first time of retransmission of the PSSCH corresponds to two PSFCHs, to ensure that the initial transmission and the retransmission are performed within a time unit range (for example, 32 slots) of the indication limitation of the SCI.

Further, in an optional implementation, the method further includes:
indicating related information of the PSFCH by using SCI, where the related information includes at least one of the following:
a quantity of PSFCHs corresponding to the PSSCH;
a time domain position of a PSFCH corresponding to the PSSCH; or
a time-frequency position of a PSFCH corresponding to the PSSCH.

Specifically, an indication field may be added in the SCI, to carry the related information of the PSFCH.

In a specific implementation, the SCI is any one of the following:
first stage sidelink control information 1st-stage SCI, where the 1st-stage SCI is carried by the PSCCH; or
second stage sidelink control information 2nd-stage SCI, where the 2nd-stage SCI is carried by the PSSCH.

Further, in a specific implementation, the method further includes:
transmitting the PSCCH and the PSSCH on the selected resource used for the transmission of the PSCCH and PSSCH; and
performing receiving on a PSFCH corresponding to the PSSCH. This step includes: performing receiving successively on a plurality of PSFCHs corresponding to the PSSCH until HARQ feedback information is successfully received.

In an optional implementation, the method further includes any one of the following:
if HARQ feedback information carried by the PSFCH is successfully received, determining, based on the HARQ feedback information, whether to execute a next time of transmission of the PSSCH. Specifically, if the HARQ feedback information is an ACK, subsequent retransmission is canceled; or if the HARQ feedback information is a NACK, the next time of transmission of the PSSCH is executed; and
if the HARQ feedback information is not successfully received, continuing to receive HARQ feedback information at a transmission instant of a subsequent PSFCH corresponding to the PSSCH. It should be noted herein that a "subsequent PSFCH" in this step is a PSFCH that is in the plurality of PSFCHs corresponding to the PSSCH and that is located after a PSFCH that carries the HARQ feedback information that is not successfully received.

Further, in an optional implementation, the method further includes any one of the following steps (1) and (2).

In step (1), in a case in which the HARQ feedback information is not successfully received, and at least one PSFCH corresponding to the PSSCH (for example, a last PSFCH corresponding to the PSSCH) is located after a next time of transmission of the PSSCH, the next time of transmission of the PSSCH is not executed.

That is, in this optional implementation, if the at least one PSFCH corresponding to a current transmission of the PSSCH is located after the next time of transmission of the PSSCH, and HARQ feedback information corresponding to the current transmission of the PSSCH is not successfully received when an instant of the next time of transmission of the PSSCH arrives, the next time of transmission of the PSSCH may not be executed, to wait for receiving of a subsequent PSFCH corresponding to the current transmission of the PSSCH. FIG. 8 is used as an example. A resource used for three times of PSSCH transmission of one TB meets a limitation on a transmission interval in a related technology. Initial transmission is performed in a m0 slot, and corresponds to two PSFCH feedback instants. The first user equipment receives feedback information at an instant m1. A possible case is as follows:
if an ACK is received, subsequent transmission of this TB is canceled;
if a NACK is received, retransmission of the PSSCH is performed at an instant m2; or
if no feedback information is received, the first time of retransmission of the PSSCH at the instant m2 is canceled because the second time of transmission (the first time of retransmission of the PSSCH) is performed before the second PSFCH corresponding to the first time of transmission of the PSSCH.

In a case in which the first time of retransmission of the PSSCH at the instant m2 is canceled because no feedback information is received, a second user equipment may continue to receive the PSFCH at the instant m2. If ACK information is received at the instant m2, subsequent transmission is canceled; or if NACK information is received or no feedback information is received, the second time of retransmission of the PSSCH is performed at an instant m3.

In step (2), in a case in which the HARQ feedback information is not successfully received, the next time of transmission of the PSSCH is executed. That is, in a case in which the first user equipment does not successfully receive the HARQ feedback information, the first user equipment does not need to wait for transmission of a subsequent PSFCH corresponding to the current transmission of the PSSCH, thereby reducing a transmission delay. It should be emphasized that, the operation of executing the next time of transmission of the PSSCH herein is performed based on whether another transmission of the PSFCH is received before a next time of transmission of the PSSCH. For example, the first user equipment has two PSFCH receiving occasions (for HARQ feedback information of the first time of transmission of the PSSCH) after the first time of transmission of the PSSCH and before the second time of transmission of the PSSCH. If the first user equipment fails to receive the HARQ feedback information at a first PSFCH receiving instant, the first user equipment may continue to receive the HARQ feedback information at a second PSFCH receiving instant. If the HARQ feedback information still fails to be received at the second PSFCH receiving instant, the first user equipment may execute the second time of transmission of the PSSCH. Alternatively, if the first user equipment has only one PSFCH receiving occasion after the first time of transmission of the PSSCH and before the second time of transmission of the PSSCH, and fails to receive HARQ feedback information at a corresponding instant, the first user equipment may directly execute the second time of transmission of the PSSCH. That is, the first user equipment determines, based on whether HARQ feedback information is received at all PSFCH instants between the first time of transmission of the PSSCH and the second time of transmission of the PSSCH, whether to execute the second time of transmission of the PSSCH.

Further, it should be further noted that, if the first user equipment continues to perform subsequent PSSCH retransmission, a quantity of times of retransmission triggered due to failing to receive feedback information needs to be less than or equal to a configured or pre-configured first value.

As shown in FIG. 3, an embodiment of the present disclosure further provides a resource selection method for a sidelink, applied to a second user equipment, where the method includes step S301 and step S302.

In step S301, a PSCCH and a PSSCH are received. Specifically, step S301 may include: receiving the PSCCH and the PSSCH that are transmitted by a first user equipment. More specifically, step S301 may include: receiving the PSCCH that is transmitted by the first user equipment, or receiving the PSCCH and the PSSCH that are transmitted by the first user equipment.

In step S302, HARQ feedback is performed by transmission of a PSFCH corresponding to transmission of the PSSCH.

A correspondence between the transmission of the PSSCH and the transmission of the PSFCH includes at least one of the following:
one time of transmission of the PSSCH corresponds to M1 times of transmission of the PSFCH which is over different time units; or
one time of transmission of the PSSCH corresponds to a maximum of M2 times of transmission of the PSFCH which is over different time units, where
M1 and M2 are positive integers that are configured or pre-configured, and the PSFCH is used to carry HARQ feedback information.

According to the resource selection method for a sidelink according to embodiments of the present disclosure, a second user equipment first receives a PSCCH and a PSSCH, and then performs HARQ feedback on transmission of a plurality of PSFCHs corresponding to transmission of the PSSCH, thereby providing a plurality of PSFCH feedback occasions between two adjacent times of transmission of the PSSCH, and effectively solving the following problems that a PSFCH cannot be transmitted due to a channel access failure, resource waste is caused by excessive retransmission due to the transmission failure of the PSFCH, or a transmitting end cancels subsequent retransmission in a case of a receiving failure at a receiving end, resulting in a decoding failure of a data packet.

Further, in an optional implementation, the method further includes:
in a case in which the correspondence is that one time of transmission of the PSSCH corresponds to a maximum of M2 times of transmission of the PSFCH which is over different time units, obtaining, according to received SCI, related information of a PSFCH that actually corresponds to the transmission of the PSSCH. The related information includes at least one of the following:
a quantity of PSFCHs corresponding to the PSSCH;
a time domain position of a PSFCH corresponding to the PSSCH; or
a time-frequency position of a PSFCH corresponding to the PSSCH.

In this optional implementation, a transmission position of the PSFCH that actually corresponds to transmission of the PSSCH can be determined based on the obtained related information, to perform HARQ feedback at the transmission position of the PSFCH.

In an optional implementation, the method further includes:
in a case in which HARQ feedback information is not successfully transmitted on a first PSFCH due to a channel access failure, determining a first resource used by a second PSFCH and HARQ feedback information carried by the second PSFCH; and
transmitting, by using the first resource, the HARQ feedback information on the second PSFCH.

The first PSFCH and the second PSFCH correspond to the same PSSCH, and the second PSFCH is located after the first PSFCH.

It should be noted herein that, in this optional implementation, the process of transmitting the HARQ feedback information on the second PSFCH includes: transmitting the HARQ feedback information on the second PSFCH in a case in which channel access succeeds. That is, the HARQ feedback information is transmitted on the second PSFCH only when channel access of the second user equipment has succeeded.

In an optional implementation, the process of determining a first resource used by a second PSFCH and HARQ feedback information carried by the second PSFCH includes:
in a case in which a first condition is met, determining the first resource based on a time-frequency position of a second resource used for transmission of the PSSCH, where the HARQ feedback information carried by the second PSFCH is the same as HARQ feedback information carried by the first PSFCH.

The first condition includes any one of the following:
A next time of transmission of the PSSCH is performed after a transmission instant of the second PSFCH; or
A next time of transmission of the PSSCH is performed before a transmission instant of the second PSFCH, and the first resource and the second resource do not meet a HARQ limitation condition.

It should be noted herein that, in this optional implementation, first, the transmission of the PSSCH refers to a current transmission of the PSSCH; second, the first resource is specifically a frequency domain resource used for transmission of the second PSFCH; third, the HARQ feedback limitation condition is the time length indicated by "a" in the related technology, or may be understood as follows: HARQ feedback information corresponding to the next time of transmission of the PSSCH cannot be transmitted at the transmission instant of the second PSFCH in consideration of a minimum time gap requirement between the PSSCH and the PSFCH. Therefore, this optional embodiment is implemented as follows. In time domain, if the next time of transmission of the PSSCH is performed after the transmission instant of the second PSFCH, or in time domain, if the next time of transmission of the PSSCH is performed before the transmission instant of the second PSFCH and a time gap between the two does not meet the HARQ limitation condition, based on time-frequency position information of the second resource used for the current transmission of the PSSCH, a frequency domain resource of the second PSFCH is determined, and it is determined that the HARQ feedback information carried by the second PSFCH is the same as the HARQ feedback information carried by the first PSFCH.

In another optional implementation, the process of determining a first resource used by a second PSFCH and HARQ feedback information carried by the second PSFCH includes:
in a case in which a next time of transmission of the PSSCH is performed before a transmission instant of the second PSFCH, and a HARQ limitation condition is met between the next time of transmission of the PSSCH and the transmission instant of the second PSFCH, executing any one of the following:
determining the first resource based on time-frequency position information of a second resource used for transmission of the PSSCH, and determining, based on a decoding result of the transmission of the PSSCH, the HARQ feedback information carried by the second PSFCH;
determining the first resource based on time-frequency position information of a third resource used for a next time of transmission of the PSSCH, and determining, based on a decoding result of the next time of transmission of the PSSCH, the HARQ feedback information carried by the second PSFCH; or
determining the first resource based on a time-frequency position of a resource used for Y times of transmission of the PSSCH before the second PSFCH, and determining, based on a decoding result of the Y times of transmission of the PSSCH, the HARQ feedback information carried by the second PSFCH, where Y is a positive integer that is configured or pre-configured.

Similarly, in this optional implementation, first, the transmission of the PSSCH refers to the current transmission of the PSSCH; second, the first resource is specifically the frequency domain resource used for the transmission of the second PSFCH.

It should be noted herein that, for this optional implementation, first, the HARQ feedback limitation condition is the time length indicated by "a" in the related technology; second, when the HARQ feedback limitation is met between the current transmission of the PSSCH and the second PSFCH corresponding to the current transmission of the PSSCH, the second user equipment may perform, based on a decoding result and a time-frequency position of the current transmission of the PSSCH, HARQ feedback at a feedback instant of the second PSFCH; or perform, based on a time-frequency position and a decoding result of a resource used for the next time of transmission of the PSSCH, HARQ feedback at the feedback instant of the second PSFCH; or perform, based on a time-frequency position of each of resources used for previous Y times of transmission of the PSSCH that have been executed and a corresponding decoding result, HARQ feedback at the feedback instant of the second PSFCH, where in this case, the second PSFCH carries a plurality of pieces of HARQ feedback information, and each time of transmission of the PSSCH in the Y times of transmission of the PSSCH corresponds to one piece of HARQ feedback information; fifth, Y may be a positive integer less than or equal to M1 and/or a positive integer less than or equal to M2; specifically, Y may be 2.

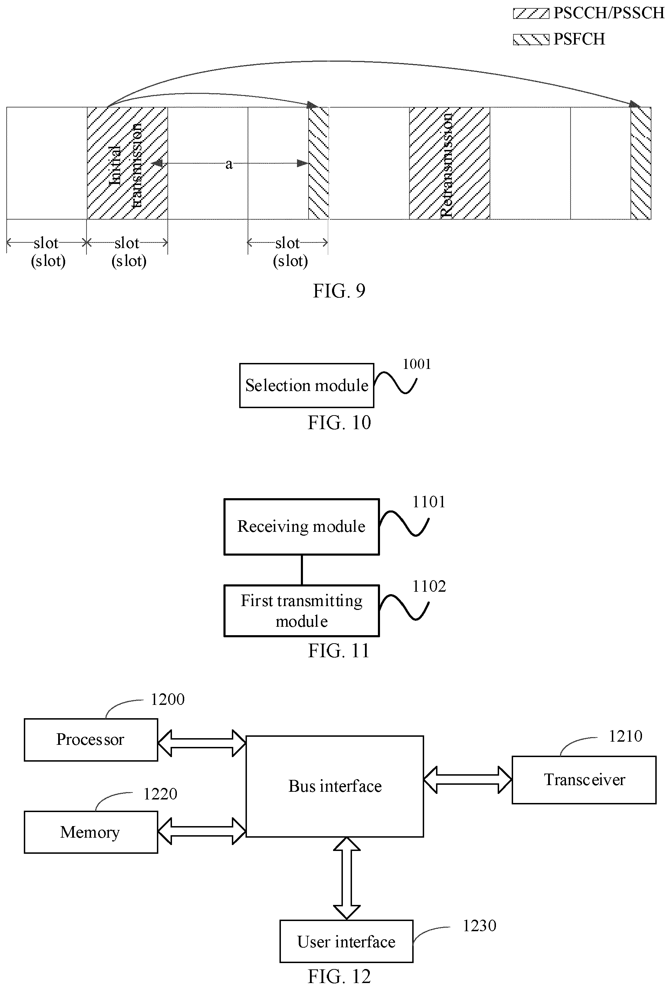

With reference to FIG. 9, the following specifically describes the foregoing two optional implementations.

As shown in FIG. 9, a transmitting end performs resource selection according to a time requirement limitation in a related technology, and each time of transmission of a PSCCH corresponds to two times of transmission of a PSFCH. After the first time of transmission of a PSSCH, a receiving end determines HARQ feedback information based on a decoding result of the PSSCH. Due to a channel access failure, the HARQ feedback information fails to be transmitted at the first PSFCH transmission instant. Then, the transmitting end performs the second time of transmission (that is, retransmission) of the PSSCH because no feedback information is received. A processing method of the receiving end may include the following three processing methods.

Processing method 1: If the receiving end has successfully decoded initial transmission, the receiving end is unnecessary to receive or decode retransmission. The receiving end directly transmits the HARQ feedback information at the second PSFCH transmission instant, where the feedback information is an ACK, and selects a transmission resource for the second PSFCH transmission instant based on time-frequency information of the initial transmission.

Processing method 2: If the receiving end fails to decode initial transmission, the receiving end needs to decode retransmission. Then, the receiving end determines, based on a decoding result of the retransmission, HARQ feedback information to be transmitted at the second PSFCH transmission instant, and selects a transmission resource for the second PSFCH transmission instant based on time-frequency information of the retransmission.

Processing method 3: If the receiving end fails to decode initial transmission, the receiving end needs to decode retransmission. Then, the receiving end transmits both HARQ feedback information corresponding to the initial transmission and HARQ feedback information corresponding to the retransmission at the second PSFCH transmission instant, and selects transmission resources for the second PSFCH transmission instant respectively based on time-frequency information of the initial transmission and time-frequency information of the retransmission.

According to the foregoing resource selection method for a sidelink in embodiments of the present disclosure, it can be ensured that one time of transmission of a PSSCH corresponds to a plurality of times of feedback of a PSFCH. On the one hand, a problem the PSFCH cannot be transmitted due to a channel access failure can be solved at a certain degree, thereby solving the following two problems due to the transmission failure of the PSFCH. In a first problem, for a NACK only feedback manner, if a NACK cannot be transmitted due to a channel access failure, a transmitting end user equipment (the first user equipment) considers that a receiving end user equipment (the second user equipment) has successfully received the PSSCH and no longer performs retransmission, but actually the receiving end user equipment does not successfully receive the PSSCH. In a second problem, for an ACK or NACK feedback manner, if the receiving end user equipment does not transmit any feedback information, the transmitting end user equipment may consider the PSSCH is not successfully received, resulting in unnecessary transmission. On the other hand, a quantity of times of transmission of the PSFCH is adjusted dynamically, thereby ensuring that a transmission delay is reduced and a quantity of resources indicated by SCI is increased as much as possible in a case of a plurality of times of transmission of the PSFCH. In the third aspect, the HARQ feedback manner in embodiments of the present disclosure can ensure that the receiving end user equipment more fully utilizes a plurality of PSFCH feedback occasions, thereby reducing unnecessary retransmission.

It should be noted herein that, executing transmission of a PSSCH, executing transmission of a PSFCH, transmitting a PSSCH, transmitting a PSFCH, and the like that are mentioned in this embodiment of the present disclosure all refer to operations executed by a user equipment on a premise that channel access succeeds.

As shown in FIG. 10, an embodiment of the present disclosure further provides a resource selection apparatus for a sidelink, applied to a first user equipment. The apparatus includes:
a selection module 1001, configured to select a resource from a resource pool that supports HARQ feedback, where a selected resource is used for transmission of a PSCCH and transmission of a PSSCH. A correspondence between the transmission of the PSSCH and transmission of a PSFCH includes at least one of the following:
one time of transmission of the PSSCH corresponds to M1 times of transmission of the PSFCH which is over different time units; or
one time of transmission of the PSSCH corresponds to a maximum of M2 times of transmission of the PSFCH which is over different time units,
where M1 and M2 are positive integers that are configured or pre-configured, and the PSFCH is used to carry HARQ feedback information.

Optionally, the selected resource used for the transmission of the PSSCH meets at least one of the following requirements:
a time gap between any two resources used for the transmission of the PSSCH is greater than or equal to a HARQ feedback time; or
an indication limitation of sidelink control information SCI, used to limit a time unit in which a PSSCH transmission resource indicated by the SCI is located.

Optionally, the HARQ feedback time is a sum of a first time length and a second time length.

The first time length is a time required for PSFCH reception and processing plus retransmission preparation.

The second time length is any one of the following:
a time gap between a last symbol of a first resource in any two resources used for the transmission of the PSSCH and a start symbol of a resource used for a last time of transmission of the PSFCH in the M1 times of transmission of the PSFCH corresponding to the transmission of the PSSCH; or
a time gap between a last symbol of the first resource in the any two resources used for the transmission of the PSSCH and a start symbol of a resource used for the N^{th} time of transmission of the PSFCH corresponding to the transmission of the PSSCH, where N is a positive integer less than or equal to M2.

Optionally, N is configured, pre-configured, or determined based on at least one of the following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH, a PSFCH receiving and processing time, a retransmission preparation time, or a channel occupancy time COT.

Optionally, the selection module 1001 is configured to:
in a case in which the HARQ feedback time and the indication limitation of the SCI cannot be met at the same time, select the resource according to any one of the following principles:
preferentially meeting the HARQ feedback time; or
preferentially meeting the indication limitation of the SCI.

Optionally, for selecting the resource selection according to the principle of preferentially meeting the indication limitation of the SCI, the selection module 1001 is configured to:
adjust a quantity of times of transmission of the PSFCH corresponding to the transmission of the PSSCH, where the quantity of times of transmission of the PSFCH corresponding to the transmission of the PSSCH is configured, pre-configured, or determined based on at least one of the following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH, a PSFCH receiving and processing time, a retransmission preparation time, or a COT; and
select the resource from the resource pool based on the determined quantity of times of transmission of the PSFCH corresponding to the transmission of the PSSCH.

Optionally, the apparatus further includes:
an indication module, configured to indicate related information of the PSFCH by using SCI. The related information includes at least one of the following:
a quantity of PSFCHs corresponding to the PSSCH;
a time domain position of a PSFCH corresponding to the PSSCH; or
a time-frequency position of a PSFCH corresponding to the PSSCH.

Optionally, the SCI is any one of the following:
first stage sidelink control information 1st-stage SCI, where the 1st-stage SCI is carried by the PSCCH; or
second stage sidelink control information 2nd-stage SCI, where the 2nd-stage SCI is carried by the PSSCH.

Further, the apparatus further includes:
a transmitting module, configured to transmit the PSCCH and the PSSCH on the selected resource used for the transmission of the PSCCH and the transmission of the PSSCH; and
a receiving module, configured to perform receiving on a PSFCH corresponding to the PSSCH.

Further, the apparatus further includes:
a first processing module, configured to execute at least one of the following:
if HARQ feedback information carried by the PSFCH is successfully received, determining, based on the HARQ feedback information, whether to execute a next time of transmission of the PSSCH; or
if the HARQ feedback information is not successfully received, receiving HARQ feedback information at a transmission instant of a subsequent PSFCH corresponding to the PSSCH.

Further, the apparatus further includes:
a second processing module, configured to execute any one of the following:
in a case in which the HARQ feedback information is not successfully received, and transmission at least one PSFCH corresponding to the PSSCH is performed after a next time of transmission of the PSSCH, skipping executing the next time of transmission of the PSSCH; or
in a case in which the HARQ feedback information is not successfully received, executing the next time of transmission of the PSSCH.

As shown in FIG. 11, an embodiment of the present disclosure further provides a resource selection apparatus for a sidelink, applied to a second user equipment. The apparatus includes:
a receiving module 1101, configured to receive a PSCCH and a PSSCH; and
a first transmitting module 1102, configured to perform HARQ feedback on transmission of a PSFCH corresponding to transmission of the PSSCH.

A correspondence between the transmission of the PSSCH and the transmission of the PSFCH includes at least one of the following:
one time of transmission of the PSSCH corresponds to M1 times of transmission of the PSFCH which is over different time units; or
one time of transmission of the PSSCH corresponds to a maximum of M2 times of transmission of the PSFCH which is over different time units, where
M1 and M2 are positive integers that are configured or pre-configured, and the PSFCH is used to carry HARQ feedback information.

Further, the apparatus further includes:
an obtaining module, configured to: in a case in which the correspondence is that one time of transmission of the PSSCH corresponds to a maximum of M2 times of transmission of the PSFCH which is over different time units, obtain, according to received SCI, related information of a PSFCH that actually corresponds to the transmission of the PSSCH. The related information includes at least one of the following:
a quantity of PSFCHs corresponding to the PSSCH;
a time domain position of a PSFCH corresponding to the PSSCH; or
a time-frequency position of a PSFCH corresponding to the PSSCH.

Further, the apparatus further includes:
a determining module, configured to: in a case in which HARQ feedback information is not successfully transmitted on a first PSFCH due to a channel access failure, determine a first resource used by a second PSFCH and HARQ feedback information carried by the second PSFCH; and
a second transmitting module, configured to transmit, by using the first resource, the HARQ feedback information on the second PSFCH.

The first PSFCH and the second PSFCH correspond to the same PSSCH, and the second PSFCH is located after the first PSFCH.

Optionally, the determining module is configured to:
in a case in which a first condition is met, determine the first resource based on time-frequency position information of a second resource used for transmission of the PSSCH, where the HARQ feedback information carried by the second PSFCH is the same as HARQ feedback information carried by the first PSFCH.

The first condition includes any one of the following:
a next time of transmission of the PSSCH is performed after a transmission instant of the second PSFCH; or
a next time of transmission of the PSSCH is performed before a transmission instant of the second PSFCH, and a HARQ limitation condition is not met between the next time of transmission of the PSSCH and the transmission instant of the second PSFCH.

Optionally, the determining module is configured to:
in a case in which a next time of transmission of the PSSCH is performed before a transmission instant of the second PSFCH, and a HARQ limitation condition is met between the next time of transmission of the PSSCH and the transmission instant of the second PSFCH, execute any one of the following:
determining the first resource based on time-frequency position information of a second resource used for transmission of the PSSCH, and determining, based on a decoding result of the transmission of the PSSCH, the HARQ feedback information carried by the second PSFCH;
determining the first resource based on time-frequency position information of a third resource used for a next time of transmission of the PSSCH, and determining, based on a decoding result of the next time of transmission of the PSSCH, the HARQ feedback information carried by the second PSFCH; or
determining the first resource based on a time-frequency position of a resource used for Y times of transmission of the PSSCH before the second PSFCH, and determining, based on a decoding result of the Y times of transmission of the PSSCH, the HARQ feedback information carried by the second PSFCH, where Y is a positive integer that is configured or pre-configured.

As shown in FIG. 12, an embodiment of the present disclosure further provides a user equipment, including a processor 1200, a memory 1220, and a program stored on the memory 1220 and capable of being run on the processor 1200. When the program is executed by the processor 1200, the foregoing embodiments of the resource selection methods for a sidelink applied to the first user equipment or the second user equipment are implemented, and a same technical effect can be achieved. To avoid repetition, details are not described herein again.

A transceiver 1210 is configured to receive and transmit data under control of the processor 1200.

In FIG. 12, a bus architecture may include any quantity of interconnected buses and bridges, and specifically interconnect various circuits of one or more processors represented by the processor 1200 and a memory represented by the memory 1220. The bus architecture may further interconnect various other circuits such as a peripheral device, a voltage regulator, and a power management circuit. These are all well known in the art, and therefore are not further described in this specification. The bus interface provides an interface. The transceiver 1210 may be a plurality of components, that is, includes a transmitter and a receiver; and provides units for communicating with various other apparatuses on a transmission medium. For different user equipments, a user interface 1230 may alternatively be an interface capable of externally or internally connecting a required device, and the connected device includes, but is not limited to, a keypad, a display, a speaker, a microphone, a joystick, and the like.

The processor 1200 is configured to perform management of the bus architecture and general processing, and the memory 1220 may store data for use by the processor 1200 when the processor 1200 executes operations.

In addition, an embodiment of the present disclosure further provides a computer-readable storage medium, and the readable storage medium stores a program. When the program is executed by a processor, the processes of the foregoing embodiments of the resource selection methods for a sidelink are implemented, and a same technical effect can be achieved. To avoid repetition, details are not described herein again. The computer-readable storage medium may include a read-only memory (Read-Only Memory, ROM), a random access memory (Random Access Memory, RAM), a magnetic disk, or an optical disk.

In addition, it should be noted that, in the apparatus and method of the present disclosure, it is apparent that each component or step may be decomposed and/or recombined. In addition, the steps for performing the foregoing series of processing may be performed in a chronological order as described, but are unnecessary to be performed in a chronological order, and some of the steps may be performed in parallel or independently from each other. A person of ordinary skill in the art can understand that all or any of the steps or components of the methods and apparatuses of the present disclosure may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the description of the present disclosure.

Therefore, the objectives of the present disclosure may also be achieved by running a program or a group of programs on any computing apparatus. The computing apparatus may be a well-known general apparatus. Therefore, the objectives of the present disclosure may also be achieved by providing only a program product including program code for implementing the methods or apparatuses. In other words, such a program product is also included in the present disclosure, and a storage medium that stores such a program product is also included in the present disclosure. Apparently, the storage medium may be any well-known storage medium or any storage medium to be developed in the future.

Finally, it should be further noted that in this specification, relational terms such as "first" and "second" are only used to distinguish one entity or operation from another, and do not necessarily require or imply that any actual relationship or sequence exists between these entities or operations. In addition, the term "comprise", "include", or any other variant thereof is intended to cover a non-exclusive inclusion, so that a process, a method, an article, or a terminal device that includes a list of elements not only includes those elements but also includes other elements that are not expressly listed, or further includes elements inherent to such a process, method, article, or device. In absence of more constraints, an element preceded by "includes a..." does not preclude the existence of other identical elements in the process, method, article, or device that includes the element.

The foregoing descriptions are merely the preferred implementations of the present disclosure. It should only be noted that those of ordinary skill in the art may further make various improvements and modifications without departing from the principles of the present disclosure, and these improvements and modifications also fall within the protection scope of the present disclosure, in accordance with the appended claims.

## Claims

1. A resource selection method for a sidelink, applied to a first user equipment, the method comprises:
selecting (201) a resource from a resource pool that supports hybrid automatic repeat request HARQ feedback, wherein a selected resource is used for transmission of a physical sidelink control channel PSCCH and transmission of a physical sidelink shared channel PSSCH, and a correspondence between the transmission of the PSSCH and transmission of a physical sidelink feedback channel PSFCH comprises:
one time of transmission of the PSSCH corresponds to M1 times of transmission of the PSFCH which is over different time units;
wherein M1 is a positive integer that is configured or pre-configured, and the PSFCH is used to carry HARQ feedback information;
wherein the selected resource used for the transmission of the PSSCH meets a following requirement:
a time gap between any two resources used for the transmission of the PSSCH is greater than or equal to a HARQ feedback time.

2. The method according to claim 1, wherein the HARQ feedback time is a sum of a first time length and a second time length, wherein
the first time length is a time required for PSFCH reception and processing plus retransmission preparation; and
the second time length is:
a time gap between a last symbol of a first resource in the any two resources used for the transmission of the PSSCH and a start symbol of a resource used for a last time of transmission of the PSFCH in the M1 times of transmission of the PSFCH corresponding to the transmission of the PSSCH.

3. The method according to claim 2, wherein N is configured, pre-configured, or determined based on at least one of following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH, a PSFCH receiving and processing time, a retransmission preparation time, or a channel occupancy time COT.

4. The method according to claim 1, wherein the selecting the resource from the resource pool that supports hybrid automatic repeat request HARQ feedback comprises:
in a case in which the HARQ feedback time and the indication limitation of the SCI fail to be met at the same time, selecting the resource according to any one of following principles:
preferentially meeting the HARQ feedback time; or
preferentially meeting the indication limitation of the SCI.

5. The method according to claim 4, wherein the selecting the resource according to the principle of preferentially meeting the indication limitation of the SCI comprises:
adjusting a quantity of times of transmission of the PSFCH corresponding to the transmission of the PSSCH, wherein the quantity of times of transmission of the PSFCH corresponding to the transmission of the PSSCH is configured, pre-configured, or determined based on at least one of following: a maximum quantity of resources indicated by SCI, a quantity of resources indicated by SCI, a maximum gap between resources indicated by SCI, a period configured for a PSFCH, a minimum time gap between a PSSCH and a PSFCH corresponding to the PSSCH, a PSFCH receiving and processing time, a retransmission preparation time, or a COT; and
selecting the resource from the resource pool based on the determined quantity of times of transmission of the PSFCH corresponding to the transmission of the PSSCH.

6. The method according to claim 1, wherein the method further comprises:
transmitting the PSCCH and the PSSCH on the selected resource used for the transmission of the PSCCH and the transmission of the PSSCH; and
performing receiving on a PSFCH corresponding to the PSSCH.

7. The method according to claim 6, wherein the method further comprises any one of following:
if HARQ feedback information carried by the PSFCH is successfully received, determining, based on the HARQ feedback information, whether to execute a next time of transmission of the PSSCH; or
if the HARQ feedback information is not successfully received, receiving HARQ feedback information at a transmission instant of a subsequent PSFCH corresponding to the PSSCH.

8. The method according to claim 6, wherein the method comprises:
in a case in which the HARQ feedback information is not successfully received, and transmission of at least one PSFCH corresponding to the PSSCH is performed after a next time of transmission of the PSSCH, skipping executing the next time of transmission of the PSSCH; or
in a case in which the HARQ feedback information is not successfully received, executing the next time of transmission of the PSSCH.

9. A resource selection method for a sidelink, applied to a second user equipment, the method comprises:
receiving (301) a PSCCH and a PSSCH; and
performing (302) HARQ feedback on transmission of a PSFCH corresponding to transmission of the PSSCH, wherein
a correspondence between the transmission of the PSSCH and the transmission of the PSFCH comprises:
one time of transmission of the PSSCH corresponds to M1 times of transmission of the PSFCH which is over different time units; wherein
M1 is a positive integer that is configured or pre-configured, and the PSFCH is used to carry HARQ feedback information;
wherein the selected resource used for the transmission of the PSSCH meets a following requirement:
a time gap between any two resources used for the transmission of the PSSCH is greater than or equal to a HARQ feedback time.

10. The method according to claim 9, wherein the method further comprises:
in a case in which HARQ feedback information is not successfully transmitted on a first PSFCH due to a channel access failure, determining a first resource used by a second PSFCH and HARQ feedback information carried by the second PSFCH; and
transmitting, by using the first resource, the HARQ feedback information on the second PSFCH, wherein
the first PSFCH and the second PSFCH correspond to the same PSSCH, and the second PSFCH is located after the first PSFCH.

11. The method according to claim 10, wherein the determining the first resource used by the second PSFCH and HARQ feedback information carried by the second PSFCH comprises:
in a case in which a first condition is met, determining the first resource based on time-frequency position information of a second resource used for transmission of the PSSCH, wherein the HARQ feedback information carried by the second PSFCH is the same as HARQ feedback information carried by the first PSFCH, wherein
the first condition comprises any one of following:
a next time of transmission of the PSSCH is performed after a transmission instant of the second PSFCH; or
a next time of transmission of the PSSCH is performed before a transmission instant of the second PSFCH, and a HARQ limitation condition is not met between the next time of transmission of the PSSCH and the transmission instant of the second PSFCH.

12. The method according to claim 10, wherein the determining the first resource used by the second PSFCH and HARQ feedback information carried by the second PSFCH comprises:
in a case in which a next time of transmission of the PSSCH is performed before a transmission instant of the second PSFCH, and a HARQ limitation condition is met between the next time of transmission of the PSSCH and the transmission instant of the second PSFCH, executing any one of following:
determining the first resource based on time-frequency position information of a second resource used for transmission of the PSSCH, and determining, based on a decoding result of the transmission of the PSSCH, the HARQ feedback information carried by the second PSFCH;
determining the first resource based on time-frequency position information of a third resource used for a next time of transmission of the PSSCH, and determining, based on a decoding result of the next time of transmission of the PSSCH, the HARQ feedback information carried by the second PSFCH; or
determining the first resource based on a time-frequency position of a resource used for Y times of transmission of the PSSCH before the second PSFCH, and determining, based on a decoding result of the Y times of transmission of the PSSCH, the HARQ feedback information carried by the second PSFCH, wherein Y is a positive integer that is configured or pre-configured.

13. A resource selection apparatus for a sidelink, for
a first user equipment, wherein the apparatus comprises:
a memory storing computer programs; and
a processor, configured to execute the computer programs stored in the memory to implement the method according to any one of claims 1 to 8, or the method according to any one of claims 9 to 12.

## Patentansprüche

1. Ein Ressourcenauswahlverfahren für einen Sidelink, das auf ein erstes Benutzergerät angewendet wird, wobei das Verfahren Folgendes beinhaltet:
Auswählen (201) einer Ressource aus einem Ressourcenpool, der Feedback mit hybrider automatischer Wiederholungsanforderung, HARQ, unterstützt, wobei eine ausgewählte Ressource zur Übertragung eines physikalischen Sidelink-Steuerkanals, PSCCH, und zur Übertragung eines gemeinsam genutzten physikalischen Sidelink-Kanals, PSSCH, verwendet wird und eine Beziehung zwischen der Übertragung des PSSCH und einer Übertragung eines physikalischen Sidelink-Feedback-Kanals, PSFCH, Folgendes beinhaltet:
eine Zeit zur Übertragung des PSSCH entspricht M1 Zeiten zur Übertragung des PSFCH, die über unterschiedliche Zeiteinheiten erfolgt;
wobei M1 eine positive ganze Zahl ist, die konfiguriert oder vorkonfiguriert ist, und der PSFCH verwendet wird, um HARQ-Feedback-Informationen zu tragen;
wobei die ausgewählte Ressource, die für die Übertragung des PSSCH verwendet wird,
eine folgende Anforderung erfüllt:
eine Zeitlücke zwischen beliebigen zwei Ressourcen, die für die Übertragung des PSSCH verwendet werden, ist größer als oder gleich einer HARQ-Feedback-Zeit.

2. Verfahren gemäß Anspruch 1, wobei die HARQ-Feedback-Zeit eine Summe aus einer ersten Zeitlänge und einer zweiten Zeitlänge ist, wobei
die erste Zeitlänge eine Zeit ist, die für PSFCH-Empfang und -Verarbeitung plus Vorbereitung einer erneuten Übertragung erforderlich ist; und
die zweite Zeitlänge Folgendes ist:
eine Zeitlücke zwischen einem letzten Symbol einer ersten Ressource der beliebigen zwei Ressourcen, die für die Übertragung des PSSCH verwendet werden, und einem Startsymbol einer Ressource, die für eine letzte Zeit zur Übertragung des PSFCH der M1 Zeiten zur Übertragung des PSFCH, der der Übertragung des PSSCH entspricht, verwendet wird.

3. Verfahren gemäß Anspruch 2, wobei N basierend auf mindestens einem von Folgendem konfiguriert, vorkonfiguriert oder bestimmt wird: einer maximalen Menge an Ressourcen, die durch SCI angegeben wird, einer Menge an Ressourcen, die durch SCI angegeben wird, einer maximalen Lücke zwischen Ressourcen, die durch SCI angegeben wird, einer für einen PSFCH konfigurierten Periode, einer minimalen Zeitlücke zwischen einem PSSCH und einem PSFCH, der dem PSSCH entspricht, einer PSFCH-Empfangs- und -Verarbeitungszeit, einer Zeit zur Vorbereitung einer erneuten Übertragung oder einer Kanalbelegungszeit, COT.

4. Verfahren gemäß Anspruch 1, wobei das Auswählen der Ressource aus dem Ressourcenpool, der Feedback mit hybrider automatischer Wiederholungsanforderung, HARQ, unterstützt, Folgendes beinhaltet:
in einem Fall, in dem die HARQ-Feedback-Zeit und die Angabebegrenzung der SCI nicht gleichzeitig erfüllt sind, Auswählen der Ressource gemäß einem beliebigen der folgenden Prinzipien:
vorzugsweises Erfüllen der HARQ-Feedback-Zeit; oder
vorzugsweises Erfüllen der Angabebegrenzung der SCI.

5. Verfahren gemäß Anspruch 4, wobei das Auswählen der Ressource gemäß dem Prinzip des vorzugsweisen Erfüllens der Angabebegrenzung der SCI Folgendes beinhaltet:
Anpassen einer Menge an Zeiten zur Übertragung des PSFCH, der der Übertragung des PSSCH entspricht, wobei die Menge an Zeiten zur Übertragung des PSFCH, der der Übertragung des PSSCH entspricht, basierend auf mindestens einem von Folgendem konfiguriert, vorkonfiguriert oder bestimmt wird: einer maximalen Menge an Ressourcen, die durch SCI angegeben wird, einer Menge an Ressourcen, die durch SCI angegeben wird, einer maximalen Lücke zwischen Ressourcen, die durch SCI angegeben wird, einer für einen PSFCH konfigurierten Periode, einer minimalen Zeitlücke zwischen einem PSSCH und einem PSFCH, der dem PSSCH entspricht,
einer PSFCH-Empfangs- und -Verarbeitungszeit, einer Zeit zur Vorbereitung einer erneuten Übertragung oder einer COT; und
Auswählen der Ressource aus dem Ressourcenpool basierend auf der bestimmten Menge an Zeiten zur Übertragung des PSFCH, der der Übertragung des PSSCH entspricht.

6. Verfahren gemäß Anspruch 1, wobei das Verfahren ferner Folgendes beinhaltet:
Übertragen des PSCCH und des PSSCH auf der ausgewählten Ressource, die für die Übertragung des PSCCH und die Übertragung des PSSCH verwendet wird; und
Durchführen des Empfangens auf einem PSFCH, der dem PSSCH entspricht.

7. Verfahren gemäß Anspruch 6, wobei das Verfahren ferner ein beliebiges von Folgendem beinhaltet:
wenn HARQ-Feedback-Informationen, die durch den PSFCH getragen werden,
erfolgreich empfangen werden, Bestimmen, basierend auf den HARQ-Feedback-Informationen, ob eine nächste Zeit zur Übertragung des PSSCH ausgeführt werden soll; oder
wenn die HARQ-Feedback-Informationen nicht erfolgreich empfangen werden, Empfangen von HARQ-Feedback-Informationen zu einem Übertragungszeitpunkt eines nachfolgenden PSFCH, der dem PSSCH entspricht.

8. Verfahren gemäß Anspruch 6, wobei das Verfahren Folgendes beinhaltet:
in einem Fall, in dem die HARQ-Feedback-Informationen nicht erfolgreich empfangen werden und eine Übertragung mindestens eines PSFCH, der dem PSSCH entspricht, nach einer nächsten Zeit zur Übertragung des PSSCH durchgeführt wird, Überspringen des Ausführens der nächsten Zeit zur Übertragung des PSSCH; oder
in einem Fall, in dem die HARQ-Feedback-Informationen nicht erfolgreich empfangen werden, Ausführen der nächsten Zeit zur Übertragung des PSSCH.

9. Ein Ressourcenauswahlverfahren für einen Sidelink, das auf ein zweites Benutzergerät angewendet wird, wobei das Verfahren Folgendes beinhaltet:
Empfangen (301) eines PSCCH und eines PSSCH; und
Durchführen (302) von HARQ-Feedback bei Übertragung eines PSFCH, der einer Übertragung des PSSCH entspricht, wobei
eine Beziehung zwischen der Übertragung des PSSCH und der Übertragung des PSFCH Folgendes beinhaltet:
eine Zeit zur Übertragung des PSSCH entspricht M1 Zeiten zur Übertragung des PSFCH, die über unterschiedliche Zeiteinheiten erfolgt; wobei M1 eine positive ganze Zahl ist, die konfiguriert oder vorkonfiguriert ist, und der PSFCH verwendet wird, um HARQ-Feedback-Informationen zu tragen;
wobei die ausgewählte Ressource, die für die Übertragung des PSSCH verwendet wird, eine folgende Anforderung erfüllt:
eine Zeitlücke zwischen beliebigen zwei Ressourcen, die für die Übertragung des PSSCH verwendet werden, ist größer als oder gleich einer HARQ-Feedback-Zeit.

10. Verfahren gemäß Anspruch 9, wobei das Verfahren ferner Folgendes beinhaltet:
in einem Fall, in dem HARQ-Feedback-Informationen auf einem ersten PSFCH aufgrund eines Kanalzugriffsfehlers nicht erfolgreich übertragen werden, Bestimmen einer ersten Ressource, die durch einen zweiten PSFCH verwendet wird, und von HARQ-Feedback-Informationen, die durch den zweiten PSFCH getragen werden; und
Übertragen, unter Verwendung der ersten Ressource, der HARQ-Feedback-Informationen auf dem zweiten PSFCH, wobei
der erste PSFCH und der zweite PSFCH demselben PSSCH entsprechen und sich der zweite PSFCH nach dem ersten PSFCH befindet.

11. Verfahren gemäß Anspruch 10, wobei das Bestimmen der ersten Ressource, die durch den zweiten PSFCH verwendet wird, und von HARQ-Feedback-Informationen, die durch den zweiten PSFCH getragen werden, Folgendes beinhaltet:
in einem Fall, in dem eine erste Bedingung erfüllt ist, Bestimmen der ersten Ressource basierend auf Zeit-Frequenz-Positionsinformationen einer zweiten Ressource, die für eine Übertragung des PSSCH verwendet wird, wobei die HARQ-Feedback-Informationen, die durch den zweiten PSFCH getragen werden, dieselben sind wie HARQ-Feedback-Informationen, die durch den ersten PSFCH getragen werden, wobei die erste Bedingung ein beliebiges von Folgendem beinhaltet:
eine nächste Zeit zur Übertragung des PSSCH wird nach einem Übertragungszeitpunkt des zweiten PSFCH durchgeführt; oder
eine nächste Zeit zur Übertragung des PSSCH wird vor einem Übertragungszeitpunkt des zweiten PSFCH durchgeführt und eine HARQ-Begrenzungsbedingung ist zwischen der nächsten Zeit zur Übertragung des PSSCH und dem Übertragungszeitpunkt des zweiten PSFCH nicht erfüllt.

12. Verfahren gemäß Anspruch 10, wobei das Bestimmen der ersten Ressource, die durch den zweiten PSFCH verwendet wird, und von HARQ-Feedback-Informationen, die durch den zweiten PSFCH getragen werden, Folgendes beinhaltet:
in einem Fall, in dem eine nächste Zeit zur Übertragung des PSSCH vor einem Übertragungszeitpunkt des zweiten PSFCH durchgeführt wird und eine HARQ-Begrenzungsbedingung zwischen der nächsten Zeit zur Übertragung des PSSCH und
dem Übertragungszeitpunkt des zweiten PSFCH erfüllt ist, Ausführen von einem beliebigen von Folgendem:
Bestimmen der ersten Ressource basierend auf Zeit-Frequenz-Positionsinformationen einer zweiten Ressource, die zur Übertragung des PSSCH verwendet wird, und Bestimmen, basierend auf einem Decodierergebnis der Übertragung des PSSCH, der HARQ-Feedback-Informationen, die durch den zweiten PSFCH getragen werden;
Bestimmen der ersten Ressource basierend auf Zeit-Frequenz-Positionsinformationen einer dritten Ressource, die für eine nächste Zeit zur Übertragung des PSSCH verwendet wird, und Bestimmen, basierend auf einem Decodierergebnis der nächsten Zeit zur Übertragung des PSSCH, der HARQ-Feedback-Informationen, die durch den zweiten PSFCH getragen werden; oder
Bestimmen der ersten Ressource basierend auf einer Zeit-Frequenz-Position einer Ressource, die für Y Zeiten zur Übertragung des PSSCH vor dem zweiten PSFCH verwendet wird, und Bestimmen, basierend auf einem Decodierergebnis der Y Zeiten zur Übertragung des PSSCH, der HARQ-Feedback-Informationen, die durch den zweiten PSFCH getragen werden, wobei Y eine positive ganze Zahl ist, die konfiguriert oder vorkonfiguriert ist.

13. Eine Ressourcenauswahlvorrichtung für einen Sidelink für eine erste Benutzerausrüstung, wobei die Vorrichtung Folgendes beinhaltet:
einen Speicher, der Computerprogramme speichert; und
einen Prozessor, der konfiguriert ist, um die in dem Speicher gespeicherten Computerprogramme auszuführen, um das Verfahren gemäß einem beliebigen der Ansprüche 1 bis 8 oder das Verfahren gemäß einem beliebigen der Ansprüche 9 bis 12 zu implementieren.

## Revendications

1. Un procédé de sélection de ressource pour une liaison latérale, appliqué à un premier équipement utilisateur, le procédé comprend :
la sélection (201) d'une ressource dans un pool de ressources qui prend en charge une rétroaction HARQ (*hybrid automatic repeat request,* demande automatique de répétition hybride), une ressource sélectionnée étant utilisée pour une transmission d'un PSCCH (*physical sidelink control channel,* canal de commande de liaison latérale physique) et
une transmission d'un PSSCH (*physical sidelink shared channel,* canal partagé de liaison latérale physique), et une correspondance entre la transmission du PSSCH et
une transmission d'un PSFCH (*physical sidelink feedback channel,* canal de rétroaction de liaison latérale physique) comprenant :
une occurrence de transmission du PSSCH correspond à M1 occurrences de transmission du PSFCH qui est sur différentes unités de temps ;
dans lequel M1 est un entier positif qui est configuré ou préconfiguré, et le PSFCH est utilisé pour transporter des informations de rétroaction HARQ ;
dans lequel la ressource sélectionnée utilisée pour la transmission du PSSCH satisfait une exigence suivante :
un intervalle de temps entre deux ressources quelconques utilisées pour la transmission du PSSCH est supérieur ou égal à un temps de rétroaction HARQ.

2. Le procédé selon la revendication 1, dans lequel le temps de rétroaction HARQ est une somme d'une première longueur temporelle et d'une deuxième longueur temporelle, dans lequel
la première longueur temporelle est un temps requis pour une réception et un traitement de PSFCH plus une préparation de retransmission ; et
la deuxième longueur temporelle est :
un intervalle de temps entre un dernier symbole d'une première ressource parmi les deux ressources quelconques utilisées pour la transmission du PSSCH et un symbole de départ d'une ressource utilisée pour une dernière occurrence de transmission du PSFCH parmi les M1 occurrences de transmission du PSFCH correspondant à la transmission du PSSCH.

3. Le procédé selon la revendication 2, dans lequel N est configuré, préconfiguré, ou déterminé sur la base d'au moins un des éléments suivants : une quantité maximum de ressources indiquée par des SCI, une quantité de ressources indiquée par des SCI, un intervalle maximum entre ressources indiqué par des SCI, une période configurée pour un PSFCH, un intervalle de temps minimum entre un PSSCH et un PSFCH correspondant au PSSCH, un temps de réception et de traitement de PSFCH, un temps de préparation de retransmission, ou un COT (*channel occupancy time,* temps d'occupation de canal).

4. Le procédé selon la revendication 1, dans lequel la sélection de la ressource dans le pool de ressources qui prend en charge une rétroaction HARQ (*hybrid automatic repeat* request) comprend :
dans le cas où le temps de rétroaction HARQ et la limitation d'indication des SCI ne sont pas satisfaits en même temps, la sélection de la ressource selon l'un quelconque des principes suivants :
satisfaire de préférence le temps de rétroaction HARQ ; ou
satisfaire de préférence la limitation d'indication des SCI.

5. Le procédé selon la revendication 4, dans lequel la sélection de la ressource selon le principe de satisfaire de préférence la limitation d'indication des SCI comprend :
l'ajustement d'une quantité d'occurrences de transmission du PSFCH correspondant à la transmission du PSSCH, la quantité d'occurrences de transmission du PSFCH correspondant à la transmission du PSSCH étant configurée, préconfigurée, ou
déterminée sur la base d'au moins un des éléments suivants : une quantité maximum de ressources indiquée par des SCI, une quantité de ressources indiquée par des SCI,
un intervalle maximum entre ressources indiqué par des SCI, une période configurée pour un PSFCH, un intervalle de temps minimum entre un PSSCH et un PSFCH correspondant au PSSCH, un temps de réception et de traitement de PSFCH, un temps de préparation de retransmission, ou un COT ; et
la sélection de la ressource dans le pool de ressources sur la base de la quantité déterminée d'occurrences de transmission du PSFCH correspondant à la transmission du PSSCH.

6. Le procédé selon la revendication 1, le procédé comprenant en outre :
la transmission du PSCCH et du PSSCH sur la ressource sélectionnée utilisée pour la transmission du PSCCH et la transmission du PSSCH ; et
la réalisation de réception sur un PSFCH correspondant au PSSCH.

7. Le procédé selon la revendication 6, le procédé comprenant en outre l'une quelconque des opérations suivantes :
si des informations de rétroaction HARQ transportées par le PSFCH sont reçues avec succès, la détermination, sur la base des informations de rétroaction HARQ, d'exécuter ou non une occurrence de transmission suivante du PSSCH ; ou
si les informations de rétroaction HARQ ne sont pas reçues avec succès, la réception d'informations de rétroaction HARQ à un instant de transmission d'un PSFCH subséquent correspondant au PSSCH.

8. Le procédé selon la revendication 6, le procédé comprenant :
dans le cas où les informations de rétroaction HARQ ne sont pas reçues avec succès, et où la transmission d'au moins un PSFCH correspondant au PSSCH est réalisée après une occurrence de transmission suivante du PSSCH, le saut de l'exécution de l'occurrence de transmission suivante du PSSCH ; ou
dans le cas où les informations de rétroaction HARQ ne sont pas reçues avec succès,
l'exécution de l'occurrence de transmission suivante du PSSCH.

9. Un procédé de sélection de ressource pour une liaison latérale, appliqué à un deuxième équipement utilisateur, le procédé comprend :
la réception (301) d'un PSCCH et d'un PSSCH ; et
la réalisation (302) d'une rétroaction HARQ sur une transmission d'un PSFCH correspondant à une transmission du PSSCH, dans lequel une correspondance entre la transmission du PSSCH et la transmission du PSFCH comprend :
une occurrence de transmission du PSSCH correspond à M1 occurrences de transmission du PSFCH qui est sur différentes unités de temps ; dans lequel M1 est un entier positif qui est configuré ou préconfiguré, et le PSFCH est utilisé pour transporter des informations de rétroaction HARQ ;
dans lequel la ressource sélectionnée utilisée pour la transmission du PSSCH satisfait une exigence suivante :
un intervalle de temps entre deux ressources quelconques utilisées pour la transmission du PSSCH est supérieur ou égal à un temps de rétroaction HARQ.

10. Le procédé selon la revendication 9, le procédé comprenant en outre :
dans le cas où des informations de rétroaction HARQ ne sont pas transmises avec succès sur un premier PSFCH en raison d'un échec d'accès au canal, la détermination d'une première ressource utilisée par un deuxième PSFCH et d'informations de rétroaction HARQ transportées par le deuxième PSFCH ; et
la transmission, par utilisation de la première ressource, des informations de rétroaction HARQ sur le deuxième PSFCH, dans lequel
le premier PSFCH et le deuxième PSFCH correspondent au même PSSCH, et le deuxième PSFCH est situé après le premier PSFCH.

11. Le procédé selon la revendication 10, dans lequel la détermination de la première ressource utilisée par le deuxième PSFCH et d'informations de rétroaction HARQ transportées par le deuxième PSFCH comprend :
dans le cas où une première condition est satisfaite, la détermination de la première ressource sur la base d'informations de position temps-fréquence d'une deuxième ressource utilisée pour une transmission du PSSCH, les informations de rétroaction HARQ transportées par le deuxième PSFCH étant les mêmes que des informations de rétroaction HARQ transportées par le premier PSFCH, dans lequel la première condition comprend l'une quelconque des conditions suivantes :
une occurrence de transmission suivante du PSSCH est réalisée après un instant de transmission du deuxième PSFCH ; ou
une occurrence de transmission suivante du PSSCH est réalisée avant un instant de transmission du deuxième PSFCH, et une condition de limitation HARQ n'est pas satisfaite entre l'occurrence de transmission suivante du PSSCH et l'instant de transmission du deuxième PSFCH.

12. Le procédé selon la revendication 10, dans lequel la détermination de la première ressource utilisée par le deuxième PSFCH et d'informations de rétroaction HARQ transportées par le deuxième PSFCH comprend :
dans le cas où une occurrence de transmission suivante du PSSCH est réalisée avant un instant de transmission du deuxième PSFCH, et où une condition de limitation HARQ est satisfaite entre l'occurrence de transmission suivante du PSSCH et l'instant de transmission du deuxième PSFCH, l'exécution de l'une quelconque des opérations suivantes :
la détermination de la première ressource sur la base d'informations de position temps-fréquence d'une deuxième ressource utilisée pour une transmission du PSSCH, et la détermination, sur la base d'un résultat de décodage de la transmission du PSSCH, des informations de rétroaction HARQ transportées par le deuxième PSFCH ;
la détermination de la première ressource sur la base d'informations de position temps-fréquence d'une troisième ressource utilisée pour une occurrence de transmission suivante du PSSCH, et la détermination, sur la base d'un résultat de décodage de l'occurrence de transmission suivante du PSSCH, des informations de rétroaction HARQ transportées par le deuxième PSFCH ; ou
la détermination de la première ressource sur la base d'une position temps-fréquence d'une ressource utilisée pour Y occurrences de transmission du PSSCH avant le deuxième PSFCH, et la détermination, sur la base d'un résultat de décodage des Y occurrences de transmission du PSSCH, des informations de rétroaction HARQ transportées par le deuxième PSFCH, dans lequel Y est un entier positif qui est configuré ou préconfiguré.

13. Un appareil de sélection de ressource pour une liaison latérale, pour un premier équipement utilisateur, l'appareil comprenant :
une mémoire stockant des programmes informatiques ; et
un processeur, configuré pour exécuter les programmes informatiques stockés dans la mémoire afin de mettre en œuvre le procédé selon l'une quelconque des revendications 1 à 8, ou le procédé selon l'une quelconque des revendications 9 à 12.
